# EUROPÄISCHE PATENTANMELDUNG

(11) **EP 3 825 965 A1**
(43) Veröffentlichungstag der Anmeldung: **26.05.2021**
(21) Anmeldenummer: 19210888.4
(22) Anmeldetag: 22.11.2019
(51) Int. Cl.: G07C 3/00, B25F 5/00, H04L 29/08

(54) **EINRICHTUNG ZUR ERFASSUNG VON BETRIEBSDATEN EINES MOTORANGETRIEBENEN WERKZEUGS, SYSTEM UND VERFAHREN ZUM BETREIBEN EINER EINRICHTUNG**

(71) Anmelder: Andreas Stihl AG & Co. KG, 71336 Waiblingen (DE)
(72) Erfinder: Kaiser, Michael, 71336 Waiblingen (DE); Vaas, André, 73489 Jagstzell (DE); Gurr, Kay-Steffen, 74078 Heilbronn (DE); Gramm, Michael, 70195 Stuttgart (DE)
(74) Vertreter: Patentanwälte Ruff, Wilhelm, Beier, Dauster & Partner mbB

(57) **Zusammenfassung**

Die Erfindung bezieht sich auf eine Einrichtung (1) zur Erfassung von Betriebsdaten (BD) eines motorangetriebenen Werkzeugs (2), wobei die Einrichtung (1) zur Anordnung an dem Werkzeug (2) ausgebildet ist, wobei die Einrichtung (1) aufweist:
- eine Erfassungs- und/oder Auswerteeinrichtung (3, 4), wobei die Erfassungs- und/oder Auswerteeinrichtung (3, 4) dazu ausgebildet ist, mindestens eine Größe zu erfassen, wobei die Größe von einem Betriebszustand des Werkzeugs (2) abhängig ist, und die erfasste Größe zur Ermittlung der Betriebsdaten (BD) auszuwerten, und/oder die Betriebsdaten (BD) zu erfassen,
- einen Betriebsdatenspeicher (5), wobei der Betriebsdatenspeicher (5) dazu ausgebildet ist, die ermittelten und/oder erfassten Betriebsdaten (BD) zu speichern, und
- eine Kommunikationsschnittstelle (6), wobei die Kommunikationsschnittstelle (6) dazu ausgebildet ist, in einem Verbindungszustand (VZ) mit einem externen Gerät (7) zu diesem die gespeicherten Betriebsdaten (BD) kabellos zu übertragen,
- wobei die Einrichtung (1) dazu ausgebildet ist,
- falls mindestens ein Verbindungskriterium (VK) durch die Betriebsdaten (BD) erfüllt ist und/oder mindestens ein Verbindungskriterium (VK) erfüllt ist, wobei das Verbindungskriterium (VK) ist, dass die Betriebsdaten (BD) aus dem Betriebsdatenspeicher (5) nicht gelöscht worden sind und/oder nicht übertragen worden sind,
- eine Verbindungsinformation (VI) mittels der Kommunikationsschnittstelle (6) in einem von dem Verbindungszustand (VZ) verschiedenen Sendezustand (SZ) kabellos zu senden und/oder mittels einer Ausgabeeinrichtung (9) der Einrichtung (1) auszugeben.

## Beschreibung

### ANWENDUNGSGEBIET UND STAND DER TECHNIK

Die Erfindung bezieht sich auf eine Einrichtung ist zur Erfassung von Betriebsdaten eines motorangetriebenen Werkzeugs, ein System aufweisend eine solche Einrichtung und ein Verfahren zum Betreiben einer solchen Einrichtung, insbesondere eines solchen Systems.

### AUFGABE UND LÖSUNG

Der Erfindung liegt als Aufgabe die Bereitstellung einer Einrichtung zur Erfassung von Betriebsdaten eines motorangetriebenen Werkzeugs, wobei die Einrichtung verbesserte Eigenschaften aufweist, eines Systems aufweisend eine solche Einrichtung und eines Verfahrens zum Betreiben einer solchen Einrichtung, insbesondere eines solchen Systems, zugrunde.

Die Erfindung löst diese Aufgabe durch die Bereitstellung einer Einrichtung mit den Merkmalen des Anspruchs 1 und/oder des Anspruchs 2, eines Systems mit den Merkmalen des Anspruchs 12 und/oder des Anspruchs 13 und eines Verfahrens mit den Merkmalen des Anspruchs 15. Vorteilhafte Weiterbildungen und/oder Ausgestaltungen der Erfindung sind in den abhängigen Ansprüchen beschrieben.

Die erfindungsgemäße, insbesondere elektrische, Einrichtung ist zur, insbesondere automatischen, Erfassung von Betriebsdaten eines motorangetriebenen Werkzeugs ausgebildet bzw. konfiguriert. Die Einrichtung ist zur Anordnung an, insbesondere in, dem Werkzeug ausgebildet bzw. konfiguriert. Die Einrichtung weist eine, insbesondere elektrische, Erfassungs- und/oder Auswerteeinrichtung auf. Die Erfassungs- und/oder Auswerteeinrichtung ist dazu ausgebildet bzw. konfiguriert, mindestens eine, insbesondere physikalische, Größe, insbesondere einen Wert der Größe, insbesondere automatisch, zu erfassen, wobei die Größe, insbesondere ihr Wert, von einem Betriebszustand des Werkzeugs abhängig ist, und die erfasste Größe, insbesondere ihren Wert, zur Ermittlung der Betriebsdaten, insbesondere automatisch, auszuwerten. Zusätzlich oder alternativ ist die Erfassungs- und/oder Auswerteeinrichtung dazu ausgebildet bzw. konfiguriert, die Betriebsdaten, insbesondere Werte der Betriebsdaten, insbesondere automatisch, zu erfassen.

Zusätzlich weist die Einrichtung einen, insbesondere elektrischen, Betriebsdatenspeicher auf. Der Betriebsdatenspeicher ist dazu ausgebildet bzw. konfiguriert, die ermittelten und/oder erfassten Betriebsdaten, insbesondere automatisch, zu speichern. Des Weiteren weist die Einrichtung eine, insbesondere elektrische, Kommunikationsschnittstelle auf. Die Kommunikationsschnittstelle ist dazu ausgebildet bzw. konfiguriert, in einem Verbindungszustand mit einem, insbesondere mobilen, externen Gerät zu diesem die gespeicherten Betriebsdaten, insbesondere automatisch, kabellos zu übertragen. Außerdem ist die Einrichtung dazu ausgebildet bzw. konfiguriert, falls mindestens ein Verbindungskriterium durch die, insbesondere gespeicherten, Betriebsdaten, insbesondere ihre Werte, erfüllt ist und/oder mindestens ein Verbindungskriterium erfüllt ist, wobei das Verbindungskriterium ist, dass die, insbesondere gespeicherten, Betriebsdaten aus dem Betriebsdatenspeicher, insbesondere noch, nicht gelöscht worden sind und/oder, insbesondere noch, nicht, insbesondere kabellos, übertragen worden sind, eine Verbindungsinformation, insbesondere über die Erfüllung des, insbesondere jeweiligen, Verbindungskriteriums, mittels der Kommunikationsschnittstelle in einem von dem Verbindungszustand verschiedenen Sendezustand, insbesondere automatisch, kabellos zu senden und/oder mittels einer, insbesondere elektrischen, Ausgabeeinrichtung der Einrichtung, insbesondere automatisch und/oder benutzerwahrnehmbar, auszugeben.

Zusätzlich oder alternativ weist die Einrichtung eine, insbesondere elektrische, Ermittlungseinrichtung auf. Die Ermittlungseinrichtung ist dazu ausgebildet bzw. konfiguriert, einen, insbesondere dringlichen, Wartungszustand und einen von dem Wartungszustand verschiedenen, insbesondere akuten, Fehlerzustand des Werkzeugs, insbesondere mindestens einer Komponente des Werkzeugs, basierend auf den ermittelten und/oder erfassten Betriebsdaten, insbesondere ihren Werten, insbesondere automatisch, zu ermitteln. Des Weiteren weist die Einrichtung eine, insbesondere die und/oder elektrische, Ausgabeeinrichtung auf. Außerdem ist die Einrichtung dazu ausgebildet bzw. konfiguriert, falls der Wartungszustand ermittelt ist, eine Wartungsinformation, insbesondere über die Ermittlung des Wartungszustands, mittels der Ausgabeeinrichtung, insbesondere automatisch und/oder benutzerwahrnehmbar, auszugeben. Weiter ist die Einrichtung dazu ausgebildet bzw. konfiguriert, falls der Fehlerzustand ermittelt ist, eine von der Wartungsinformation verschiedene Fehlerinformation, insbesondere über die Ermittlung des Fehlerzustands, mittels der Ausgabeeinrichtung, insbesondere automatisch und/oder benutzerwahrnehmbar, auszugeben.

Dies, insbesondere die Verbindungsinformation, ermöglicht, zu erkennen, insbesondere dem externen Gerät oder einem Benutzer, ob sich ein Aufbau des Verbindungszustands lohnt bzw. ein Bedarf zum Aufbau des Verbindungszustands besteht, insbesondere ob neue bzw. bisher nicht bekannte Betriebsdaten auf der Einrichtung verfügbar sind, oder nicht. Somit ermöglicht dies, einen unnötigen Aufbau des Verbindungszustands, insbesondere zum Übertragen alter bzw. bereits bekannter Betriebsdaten, zu vermeiden, insbesondere falls das Verbindungskriterium nicht erfüllt ist. Somit ermöglicht dies, Zeit zu sparen. Zusätzlich oder alternativ ermöglicht dies, dass das externe Gerät nicht in dem Verbindungszustand mit der Kommunikationsschnittstelle von einer anderen Einrichtung, insbesondere einer anderen Kommunikationsschnittstelle, eine Verbindungsinformation empfangen kann, insbesondere was in dem Verbindungszustand mit der Kommunikationsschnittstelle nicht möglich sein braucht, insbesondere kann.

Insbesondere kann die Einrichtung dazu ausgebildet sein, falls das Verbindungskriterium nicht erfüllt ist, darüber eine Information oder keine Verbindungsinformation zu senden und/oder auszugeben. Zusätzlich oder alternativ kann die Kommunikationsschnittstelle dazu ausgebildet sein, in dem Sendezustand die gespeicherten Betriebsdaten nicht kabellos zu senden, bzw. die Verbindungsinformation kann nicht die Betriebsdaten aufweisen.

Zusätzlich oder alternativ ermöglicht dies, insbesondere die Wartungsinformation und die Fehlerinformation ermöglichen, den Wartungszustand und den Fehlerzustand, soweit ermittelt, unterscheiden zu können und somit erkennen zu können, ob eine Wartung oder eine Behebung eines Fehlers, insbesondere eine Reparatur, des Werkzeugs erforderlich ist. Somit ermöglicht dies, zu gewährleisten, dass das Werkzeug zu einem Arbeitseinsatz einsatzfähig sein kann.

Insbesondere kann die Ermittlungseinrichtung dazu ausgebildet sein, einen von dem Wartungszustand und dem Fehlerzustand verschiedenen Bestimmungszustand bzw. bestimmungsgemäßen Zustand des Werkzeugs zu ermitteln. Die Einrichtung kann dazu ausgebildet sein, falls der Bestimmungszustand ermittelt ist, eine Bestimmungsinformation mittels der Ausgabeeinrichtung auszugeben.

Die Einrichtung kann von dem Werkzeug verschieden sein. Zusätzlich oder alternativ kann das externe Gerät von dem Werkzeug und/oder der Einrichtung verschieden sein. Weiter zusätzlich oder alternativ kann die Verbindungsinformation von den Betriebsdaten verschieden sein. Insbesondere kann die Verbindungsinformation ein kleineres Volumen, insbesondere Datenvolumen, als die Betriebsdaten aufweisen. Weiter zusätzlich oder alternativ können/kann der Wartungszustand und/oder der Fehlerzustand und/oder der Bestimmungszustand von den Betriebsdaten verschieden sein. Weiter zusätzlich oder alternativ können/kann die Wartungsinformation und/oder die Fehlerinformation und/oder die Bestimmungsinformation von dem Wartungszustand und/oder dem Fehlerzustand und/oder dem Bestimmungszustand und/oder den Betriebsdaten verschieden sein.

Die Einrichtung kann zur, insbesondere mechanischen, Kopplung mit bzw. Anbringung bzw. Befestigung an, insbesondere in, dem Werkzeug ausgebildet sein. Insbesondere kann die Einrichtung zur, insbesondere lösbaren, Verbindung mit dem Werkzeug ausgebildet sein, insbesondere durch eine stoffschlüssige Verbindung, wie eine Verklebung, eine kraftschlüssige Verbindung, wie eine Rast- bzw. Schnappverbindung, und/oder ein formschlüssige Verbindung, wie eine Verschraubung. Zusätzlich oder alternativ kann die Einrichtung an, insbesondere in, dem Werkzeug angeordnet sein, insbesondere ein Teil des Werkzeugs sein. Alternativ kann die Einrichtung getrennt von dem Werkzeug ausgebildet sein. Dies ermöglicht eine Nachrüstung der Einrichtung an dem Werkzeug. Insbesondere kann die Einrichtung als Gerät bezeichnet werden. Weiter zusätzlich oder alternativ kann die Einrichtung bei Anordnung an dem Werkzeug in direktem bzw. unmittelbarem Kontakt mit dem Werkzeug sein. Weiter zusätzlich oder alternativ kann die Einrichtung ein Teil eines Akkumulators, insbesondere eines Akkumulatorpacks, für das Werkzeug, insbesondere zur Antriebsstromversorgung des Werkzeugs, insbesondere in Form eines Akkuwerkzeugs, sein.

Das Werkzeug kann ein handgeführtes, insbesondere handgetragenes oder bodengeführtes, Werkzeug sein. Insbesondere handgeführtes, insbesondere handgetragenes, Werkzeug kann bedeuten, dass das Werkzeug eine Masse von maximal 50 Kilogramm (kg), insbesondere von maximal 20 kg, insbesondere von maximal 10 kg, aufweisen kann. Zusätzlich oder alternativ kann das Werkzeug ein Garten- und/oder Forstbearbeitungswerkzeug oder ein Bodenbearbeitungswerkzeug sein. Insbesondere kann das Werkzeug eine Säge, oder ein Hoch-Entaster, oder eine Heckenschere, oder ein Heckenschneider, oder ein Gehölzschneider, oder eine Astschere, oder ein Blasgerät, oder ein Laubbläser, oder ein Sauggerät, oder ein Laubsauger, oder ein Reinigungsgerät, oder ein Hochdruckreiniger, oder eine Kehrwalze, oder eine Kehrbürste, oder ein Rasenmäher, oder ein Freischneider, oder ein Vertikutierer sein.

Das Werkzeug kann einen Elektroantriebsmotor oder einen Verbrennungsantriebsmotor aufweisen.

Die Erfassungs- und/oder Auswerteeinrichtung kann dazu ausgebildet sein, die mindestens eine Größe und/oder die Betriebsdaten kabellos zu erfassen, insbesondere ohne eine galvanische Verbindung mit dem Werkzeug bzw. Komponenten des Werkzeugs aufzuweisen. Insbesondere kann die Erfassungs- und/oder Auswerteeinrichtung einen Sensor aufweisen, wobei der Sensor dazu ausgebildet sein kann, die mindestens eine Größe zu erfassen. Insbesondere kann der Sensor dazu ausgebildet sein, dass er dazu in der Lage sein kann, unabhängig davon, ob das Werkzeug einen Elektroantriebsmotor oder einen Verbrennungsantriebsmotor aufweist, die Größe zu erfassen. Somit können Größen und damit auch Betriebsdaten für eine Vielzahl von Antriebstechnologien wie verbrennungsmotorgetrieben, kabelgebunden, Akkumulator-basiert mit derselben Einrichtung erfasst werden, insbesondere ohne dass eine kabelgebundene Verbindung mit dem Werkzeug bzw. mit Komponenten des Werkzeugs erforderlich sein braucht. Insoweit sei auch auf die einschlägige Fachliteratur verwiesen. Zusätzlich oder alternativ kann die Einrichtung zur Verbindung mit dem Werkzeug mittels eines Kabels ausgebildet sein. Die Erfassungs- und/oder Auswerteeinrichtung kann dazu ausgebildet sein, die mindestens eine Größe und/oder die Betriebsdaten mittels des Kabels zu erfassen. Weiter zusätzlich oder alternativ kann die Größe von einem Ein-Zustand, insbesondere einer von Null verschiedenen Drehzahl, und/oder einem Aus-Zustand eines Antriebsmotors des Werkzeugs abhängig sein. Weiter zusätzlich oder alternativ kann die Erfassungs- und/oder Auswerteeinrichtung einen Mikrocontroller aufweisen.

Der Betriebsdatenspeicher kann einen nicht-flüchtigen Speicher aufweisen, wie einen FLASH-Speicher und/oder einen EEPROM-Speicher. Zusätzlich oder alternativ kann die Einrichtung dazu ausgebildet sein, die Betriebsdaten periodisch mit einer Wiederholfrequenz bzw. Abtastrate, beispielsweise 1 Hz, zu erfassen und in dem Betriebsdatenspeicher mit der Wiederholfrequenz zu speichern. Das Speichern in dem Betriebsdatenspeicher kann unter der Bedingung erfolgen, dass die Betriebsdaten sich verändert haben, insbesondere mindestens einen vorgegebenen Grenzwert erreicht und/oder überschritten haben, d.h. bei unveränderten Betriebsdaten, wie diese typisch bei einem Aus-Zustand eines Antriebsmotors des Werkzeugs sind, kann das Speichern in dem Betriebsdatenspeicher entfallen.

Die Kommunikationsschnittstelle kann eine WLAN-Schnittstelle und/oder eine Bluetooth-Schnittstelle aufweisen. Insbesondere kann der Verbindungszustand auf Englisch als connected state bezeichnet werden. Zusätzlich oder alternativ kann der Sendezustand auf Englisch als advertisement state bezeichnet werden. Weiter zusätzlich oder alternativ kann die Verbindungsinformation als Aufmerksamkeitshinweis bzw. auf Englisch als advertising event bezeichnet werden. Weiter zusätzlich oder alternativ kann die Einrichtung dazu ausgebildet sein, die Verbindungsinformation mittels der Kommunikationsschnittstelle in dem Sendezustand zu senden, unabhängig davon, ob sich das externe Gerät in Empfangsreichweite befindet oder nicht, und/oder regelmäßig zu senden und/oder zeitlich nach einem, insbesondere einem jeweiligen, Senden mittels der Kommunikationsschnittstelle nach einer Anfrage zum Aufbau des Verbindungszustands, insbesondere von dem externen Gerät, zu lauschen. Weiter zusätzlich oder alternativ kann die Einrichtung dazu ausgebildet sein, mit der Verbindungsinformation einen Identifikator, insbesondere der Einrichtung oder des Werkzeugs, wie eine Seriennummer oder eine MAC-Adresse, mittels der Kommunikationsschnittstelle in dem Sendezustand zu senden.

Das Ausgeben kann optisch sein bzw. die Ausgabeeinrichtung kann eine Anzeige aufweisen.

Die Einrichtung braucht nicht zum Live-Übertragen mittels der Kommunikationsschnittstelle und/oder nicht zum Live-Ausgeben mittels der Ausgabeeinrichtung der Betriebsdaten ausgebildet sein.

Die Betriebsdaten können aus dem Betriebsdatenspeicher nicht gelöscht worden sein und/oder nicht übertragen worden sein, falls die Betriebsdaten zeitlich nach einem letzten Löschen und/oder einem letzten Übertragen ermittelt und/oder erfasst und/oder gespeichert worden sind.

Das externe Gerät kann beispielsweise, basierend auf den in dem Verbindungszustand mit der Kommunikationsschnittstelle von dieser übertragenen Betriebsdaten, Auswertungen der Betriebsdaten vornehmen und diese dem Benutzer optisch aufbereitet darstellen.

Das Werkzeug kann, insbesondere entweder, den Bestimmungszustand oder den Wartungszustand und/oder den Fehlerzustand aufweisen. Zusätzlich oder alternativ kann die Einrichtung dazu ausgebildet sein, falls der Wartungszustand und der Fehlerzustand ermittelt sind, die Wartungsinformation und die Fehlerinformation oder nur eine der beiden Informationen, insbesondere die Fehlerinformation, mittels der Ausgabeeinrichtung auszugeben. Weiter zusätzlich oder alternativ kann die Ermittlungseinrichtung dazu ausgebildet sein, den Wartungszustand und den Fehlerzustand, insbesondere und den Bestimmungszustand, basierend auf einer Unterschreitung, einer Erreichung oder einer Überschreitung eines, insbesondere jeweiligen, vorgegebenen Grenzwerts durch die Betriebsdaten, insbesondere ihre Werte, zu ermitteln. Weiter zusätzlich oder alternativ kann die Ermittlungseinrichtung einen Mikrocontroller aufweisen.

In einer Weiterbildung der Erfindung weist die Einrichtung eine, insbesondere die und/oder elektrische, Ermittlungseinrichtung auf. Die Ermittlungseinrichtung ist dazu ausgebildet bzw. konfiguriert, einen, insbesondere den und/oder dringlichen, Wartungszustand und/oder einen, insbesondere den und/oder von dem Wartungszustand verschiedenen und/oder akuten, Fehlerzustand des Werkzeugs, insbesondere mindestens einer Komponente des Werkzeugs, basierend auf den ermittelten und/oder erfassten Betriebsdaten, insbesondere ihren Werten, insbesondere automatisch, zu ermitteln. Das Verbindungskriterium ist, dass, der Wartungszustand und/oder der Fehlerzustand ermittelt sind/ist. Insbesondere weist die Verbindungsinformation eine, insbesondere die, Wartungsinformation, insbesondere über den Wartungszustand und/oder falls der Wartungszustand ermittelt ist, und/oder eine, insbesondere die und/oder von der Wartungsinformation verschiedene, Fehlerinformation, insbesondere über den Fehlerzustand und/oder falls der Fehlerzustand ermittelt ist, auf. Dies ermöglicht, zu erkennen, ob eine Wartung oder eine Behebung eines Fehlers, insbesondere eine Reparatur, des Werkzeugs erforderlich ist. Insbesondere kann die Kommunikationsschnittstelle dazu ausgebildet sein, in dem Verbindungszustand mit dem externen Gerät zu diesem den ermittelten Wartungszustand oder den ermittelten Fehlerzustand und/oder die Betriebsdaten, basierend auf welchen der Wartungszustand oder der Fehlerzustand ermittelt ist, kabellos zu übertragen. Zusätzlich oder alternativ kann die Kommunikationsschnittstelle dazu ausgebildet sein, in dem Sendezustand die Betriebsdaten, basierend auf welchen der Wartungszustand oder der Fehlerzustand ermittelt ist, nicht kabellos zu senden bzw. die Verbindungsinformation kann nicht diese Betriebsdaten aufweisen. Weiter zusätzlich oder alternativ kann die Ermittlungseinrichtung dazu ausgebildet sein, einen von dem Wartungszustand und dem Fehlerzustand verschiedenen Bestimmungszustand bzw. bestimmungsgemäßen Zustand des Werkzeugs zu ermitteln. Die Einrichtung kann dazu ausgebildet sein, falls der Bestimmungszustand ermittelt ist, darüber eine Information oder keine Verbindungsinformation zu senden und/oder auszugeben.

In einer Weiterbildung der Erfindung sind die Betriebsdaten, insbesondere ihre Werte, für einen, insbesondere den, von dem Wartungszustand und dem Fehlerzustand verschiedenen Bestimmungszustand, den Wartungszustand und/oder den Fehlerzustand des Werkzeugs charakteristisch. Insbesondere können die Betriebsdaten eine Drehzahl eines Antriebsmotors des Werkzeugs, einen Motorstrom des Antriebsmotors, eine Temperatur des Werkzeugs, insbesondere des Antriebsmotors, eine Akkuspannung eines, insbesondere des, mit dem Werkzeug verbundenen Akkumulators mittels des Werkzeugs erfasst und/oder einen Füllstand einer Betriebsflüssigkeit aufweisen. Insbesondere kann bei einer Unterschreitung, einer Erreichung oder einer Überschreitung eines, insbesondere jeweiligen, vorgegebenen Grenzwerts durch die Betriebsdaten, insbesondere ihre Werte, ein Nachfüllen der Betriebsflüssigkeit oder ein planmäßiges Austauschen von Verschleißteilen des Werkzeugs oder ein Reinigen des Werkzeugs oder ein unplanmäßiges Austauschen oder ein in einen bestimmungsgemäßen Zustand unplanmäßiges Zurückversetzen eines defekten Teils des Werkzeugs erforderlich sein und somit kann der Wartungszustand oder der Fehlerzustand ermittelt sein bzw. werden.

In einer Weiterbildung der Erfindung weisen die Betriebsdaten Benutzungsdaten auf, insbesondere mindestens einen Zeitpunkt, wobei zu dem mindestens einen Zeitpunkt ein Antriebsmotor des Werkzeugs einen Ein-Zustand aufgewiesen hat. Dies ermöglicht, zu erkennen, wie das Werkzeug benutzt worden ist. Insbesondere können die Benutzungsdaten eine von Null verschiedene Drehzahl des Antriebsmotors zu dem Zeitpunkt aufweisen. Zusätzlich oder alternativ kann der Zeitpunkt minutengenau, insbesondere 15-Minuten-genau sein, und/oder die Benutzungsdaten können eine Laufzeitdauer, insbesondere einen zeitlichen Drehzahlverlauf, rund um den Zeitpunkt aufweisen. Weiter zusätzlich oder alternativ können die Benutzungsdaten auf Englisch als runtime history data bezeichnet werden. Weiter zusätzlich oder alternativ kann das Speichern in dem Betriebsdatenspeicher unter der Bedingung erfolgen, dass der Antriebsmotor mindestens eine vorgegebene Zeitdauer lang, wie eine Sekunde, den Ein-Zustand ununterbrochen aufgewiesen hat. Weiter zusätzlich oder alternativ kann die Kommunikationsschnittstelle dazu ausgebildet sein, in dem Sendezustand die Benutzungsdaten aufweisend mindestens den Zeitpunkt nicht kabellos zu senden bzw. die Verbindungsinformation kann nicht die Benutzungsdaten aufweisend mindestens den Zeitpunkt aufweisen. Weiter zusätzlich oder alternativ kann die Kommunikationsschnittstelle dazu ausgebildet sein, in dem Sendezustand eine Auswerteinformation ausgewertet basierend auf den Betriebsdaten, wie eine Gesamtlaufzeitdauer des Antriebsmotors, kabellos zu senden bzw. die Verbindungsinformation kann die Auswerteinformation aufweisen.

In einer Weiterbildung der Erfindung sind die Betriebsdaten verschiedenartig. Die Verbindungsinformation weist eine Artinformation über eine Art der das, insbesondere jeweilige, Verbindungskriterium erfüllenden Betriebsdaten auf. Insbesondere können die Betriebsdaten für den Wartungszustand und/oder den Fehlerzustand charakteristisch eine Art sein. Insbesondere kann das Verbindungskriterium für die Betriebsdaten für den Wartungszustand und/oder den Fehlerzustand charakteristisch sein, dass der Wartungszustand oder der Fehlerzustand ermittelt ist, und die Betriebsdaten für den Wartungszustand und/oder den Fehlerzustand charakteristisch nicht gelöscht worden sind. Zusätzlich oder alternativ können die Benutzungsdaten aufweisend mindestens den Zeitpunkt eine verschiedene Art sein. Insbesondere kann das Verbindungskriterium für die Benutzungsdaten aufweisend mindestens den Zeitpunkt sein, dass die Benutzungsdaten aufweisend mindestens den Zeitpunkt nicht übertragen worden sind.

In einer Weiterbildung der Erfindung ist die Einrichtung dazu ausgebildet bzw. konfiguriert, die, insbesondere gespeicherten, Betriebsdaten, insbesondere für den Wartungszustand und/oder den Fehlerzustand charakteristisch, aufgrund eines mittels der Kommunikationsschnittstelle in dem Verbindungszustand mit einem, insbesondere dem und/oder mobilen, externen Gerät von diesem kabellos übertragenen Löschungsbefehls aus dem Betriebsdatenspeicher, insbesondere automatisch, zu löschen.

Zusätzlich oder alternativ ist die Einrichtung dazu ausgebildet bzw. konfiguriert, zeitlich nach einem, insbesondere kabellosen, Übertragen der, insbesondere gespeicherten, Betriebsdaten, insbesondere der Benutzungsdaten, aufgrund des Übertragens die übertragenen Betriebsdaten aus dem Betriebsdatenspeicher, insbesondere automatisch, zu löschen.

Insbesondere kann der Löschungsbefehl aufgrund einer Wartung oder einer Behebung eines Fehlers, insbesondere einer Reparatur, des Werkzeugs angewiesen sein, insbesondere durch den Benutzer.

In einer Weiterbildung der Erfindung weist die Einrichtung einen elektrischen Energiespeicher, insbesondere eine Batterie, auf. Die Einrichtung ist dazu ausgebildet bzw. konfiguriert, mindestens die Kommunikationsschnittstelle mit elektrischer Energie von dem elektrischen Energiespeicher zu versorgen. Die Verbindungsinformation ermöglicht, einen unnötigen Aufbau des Verbindungszustands zu vermeiden. Somit ermöglicht dies, Energie des Energiespeichers zu sparen und somit eine Lebensdauer des Energiespeichers zu verlängern. Insbesondere kann die Batterie eine Knopfzelle, insbesondere eine CR 2032-Knopfzelle oder CR 2450-Knopfzelle sein. Zusätzlich oder alternativ kann die Einrichtung dazu ausgebildet sein, die Erfassungs- und/oder Auswerteeinrichtung, den Betriebsdatenspeicher, die Ausgabeeinrichtung und/oder die Ermittlungseinrichtung, soweit vorhanden, mit Energie von dem Energiespeicher zu versorgen.

In einer Weiterbildung der Erfindung ist die Einrichtung mindestens bei einem Aus-Zustand eines, insbesondere des, Antriebsmotors des Werkzeugs, insbesondere bei einem Betriebsunfähigkeitszustand des Werkzeugs, dazu ausgebildet bzw. konfiguriert, die Verbindungsinformation kabellos zu senden und/oder auszugeben und/oder die Wartungsinformation und/oder die Fehlerinformation, insbesondere und/oder die Bestimmungsinformation, soweit vorhanden, auszugeben. Dies ermöglicht unabhängig von einem Betriebsfähigkeitszustand des Werkzeugs, insbesondere einem Ein-Zustand des Antriebsmotors, das Senden und/oder das Ausgeben. Insbesondere kann die Einrichtung bei dem Betriebsfähigkeitszustand, insbesondere dem Ein-Zustand, dazu ausgebildet sein, zu senden und/oder auszugeben. Zusätzlich oder alternativ kann der Betriebsunfähigkeitszustand durch ein Nichtvorhandensein einer Antriebsenergiequelle, insbesondere einem Nichtverbundensein mit einem Akkumulator, verursacht sein. Weiter zusätzlich oder alternativ können/kann das Senden und/oder das Ausgeben durch den elektrischen Energiespeicher, soweit vorhanden, ermöglicht sein.

In einer Weiterbildung der Erfindung weist die Einrichtung ein benutzerbetätigbares Bedienelement auf. Die Einrichtung ist dazu ausgebildet bzw. konfiguriert, falls das Bedienelement betätigt worden ist, die Verbindungsinformation und/oder die Wartungsinformation und/oder die Fehlerinformation, insbesondere und/oder die Bestimmungsinformation, soweit vorhanden, auszugeben. Dies ermöglicht elektrische Energie, insbesondere des elektrischen Energiespeichers, soweit vorhanden, zu sparen. Insbesondere kann die Einrichtung dazu ausgebildet sein, falls das Bedienelement, insbesondere für eine vorgegebene Zeitdauer, wie beispielsweise zehn Sekunden, nicht betätigt worden ist, nicht, insbesondere mehr, auszugeben.

In einer Weiterbildung der Erfindung weist die Einrichtung ein benutzerbetätigbares, insbesondere das benutzerbetätigbare, Bedienelement auf. Das Bedienelement ist zur Benutzereingabe eines, insbesondere des, von dem Wartungszustand und dem Fehlerzustand verschiedenen Bestimmungszustands und/oder des Wartungszustands und/oder des Fehlerzustands und/oder eines anderen Zustands, insbesondere eines Reservierungszustands, des Werkzeugs in die Einrichtung ausgebildet bzw. konfiguriert. Dies ermöglicht eine Information über den Bestimmungszustand, den Wartungszustand, den Fehlerzustand und/oder den anderen Zustand, insbesondere den Reservierungszustand, soweit vorhanden, insbesondere die Bestimmungsinformation, die Wartungsinformation, die Fehlerinformation und/oder eine andere Information, insbesondere eine Reservierungsinformation, auszugeben und/oder zu senden, insbesondere falls die Ermittlungseinrichtung nicht den korrekten Zustand ermittelt hat. Insbesondere kann die Einrichtung dazu ausgebildet sein, dass zur Benutzereingabe das Bedienelement für eine vorgegebene Zeitdauer, wie mindestens drei Sekunden, betätigt werden braucht.

Das erfindungsgemäße System weist eine Einrichtung wie zuvor beschrieben auf.

Zusätzlich weist das System das Werkzeug auf.

Zusätzlich oder alternativ weist das System das, insbesondere mobile, externe Gerät auf.

Das externe Gerät ist dazu ausgebildet bzw. konfiguriert, in dem Verbindungszustand mit der Kommunikationsschnittstelle von dieser die gespeicherten Betriebsdaten, insbesondere automatisch, kabellos zu übertragen.

Zusätzlich oder alternativ ist das externe Gerät dazu ausgebildet bzw. konfiguriert, in einem von dem Verbindungszustand verschiedenen Empfangszustand die kabellos gesendete Verbindungsinformation, insbesondere automatisch, kabellos zu empfangen.

Zusätzlich oder alternativ ist das externe Gerät dazu ausgebildet bzw. konfiguriert, in dem Verbindungszustand mit der Kommunikationsschnittstelle zu dieser den Löschungsbefehl kabellos zu übertragen.

Zusätzlich oder alternativ ist das externe Gerät zur Benutzereingabe von mindestens einer Benutzerinformation über den Bestimmungszustand und/oder den Wartungszustand und/oder den Fehlerzustand und/oder den anderen Zustand, insbesondere den Reservierungszustand, insbesondere und zur kabellosen Übertragung und/oder zur Speicherung in die Einrichtung und/oder eine, insbesondere elektronische, Datenbank, insbesondere des Systems, ausgebildet bzw. konfiguriert.

Insbesondere kann das externe Gerät dazu ausgebildet sein, bei Empfang der gesendeten Verbindungsinformation zum Aufbau des Verbindungszustands mit der Kommunikationsschnittstelle bei dieser danach, insbesondere automatisch, anzufragen. Zusätzlich oder alternativ kann das externe Gerät eine beliebige datenverarbeitende Einrichtung sein, die eine geeignete kabellose Kommunikationsschnittstelle aufweisen kann, die zur kabellosen Kommunikation mit der Kommunikationsschnittstelle der Einrichtung ausgebildet sein kann. Weiter zusätzlich oder alternativ kann das externe Gerät ein Endgerät sein. Insbesondere kann das mobile Endgerät ein Laptop, ein Tablet oder ein Smartphone sein. Weiter zusätzlich oder alternativ kann mobil als portabel oder handgeführt, insbesondere handgetragen, bezeichnet werden. Weiter zusätzlich oder alternativ kann das externe Gerät ein Gateway bilden bzw. sein, das die übertragenen Betriebsdaten an die Datenbank weiterleiten kann, wie an eine Cloud-Lösung, welcher die Betriebsdaten speichern kann. Die in der Cloud-Lösung gespeicherten Betriebsdaten können dann mittels eines geeigneten Tools wie eines Web-Browsers betrachtet und ausgewertet werden.

In einer Weiterbildung der Erfindung weist das System die Einrichtung aufweisend das benutzerbetätigbare Bedienelement zur Benutzereingabe des Bestimmungszustands und/oder des Wartungszustands und/oder des Fehlerzustands und/oder des anderen Zustands, insbesondere des Reservierungszustands, des Werkzeugs in die Einrichtung auf. Das System ist dazu ausgebildet bzw. konfiguriert, aufgrund einer Betätigung des Bedienelements die Benutzereingabe und/oder die kabellose Übertragung und/oder die Speicherung der Benutzerinformation, insbesondere automatisch und/oder kabellos, freizugeben. Dies ermöglicht unberechtigte Fremdzugriffe zu vermeiden.

Die zuvor beschriebene Einrichtung kann dazu vorgesehen sein, mit dem motorangetriebenen Werkzeug, zur Erfassung von Betriebsdaten des Werkzeugs verwendet werden zu können. In anderen Worten: Verwendung der Einrichtung zur Erfassung von Betriebsdaten des motorangetriebenen Werkzeugs.

Das erfindungsgemäße, insbesondere automatische, Verfahren ist zum, insbesondere automatischen, Betreiben einer, insbesondere der, Einrichtung wie zuvor beschrieben, insbesondere eines, insbesondere des, Systems wie zuvor beschrieben, wobei die Einrichtung an dem Werkzeug angeordnet ist, ausgebildet bzw. konfiguriert. Insbesondere weist das Verfahren die Schritte auf: Erfassen, insbesondere automatisches Erfassen, mindestens der Größe, wobei die Größe von dem Betriebszustand des Werkzeugs abhängig ist, und Auswerten, insbesondere automatisches Auswerten, der erfassten Größe zur Ermittlung der Betriebsdaten, und/oder Erfassen, insbesondere automatisches Erfassen, der Betriebsdaten mittels der Erfassungs- und/oder Auswerteeinrichtung. Speichern, insbesondere automatisches Speichern, der ermittelten und/oder erfassten Betriebsdaten mittels des Betriebsdatenspeichers. Falls mindestens das Verbindungskriterium durch die Betriebsdaten erfüllt ist und/oder mindestens das Verbindungskriterium erfüllt ist, wobei das Verbindungskriterium ist, dass die Betriebsdaten aus dem Betriebsdatenspeicher nicht gelöscht worden sind und/oder nicht übertragen worden sind, kabellos Senden, insbesondere automatisch Senden, mittels der Kommunikationsschnittstelle in dem von dem Verbindungszustand verschiedenen Sendezustand und/oder Ausgeben, insbesondere automatisches Ausgeben, mittels der Ausgabeeinrichtung der Einrichtung der Verbindungsinformation.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: ein schematisches Blockschaltbild eines erfindungsgemäßen Systems aufweisend eine erfindungsgemäße Einrichtung und eines erfindungsgemäßen Verfahrens,
- Fig. 2: eine schematische Ansicht des Systems, der Einrichtung und des Verfahrens der Fig. 1, und
- Fig. 3: eine schematische Explosionsansicht der Einrichtung des Systems der Fig. 1.

### DETAILLIERTE BESCHREIBUNG DER AUSFÜHRUNGSBEISPIELE

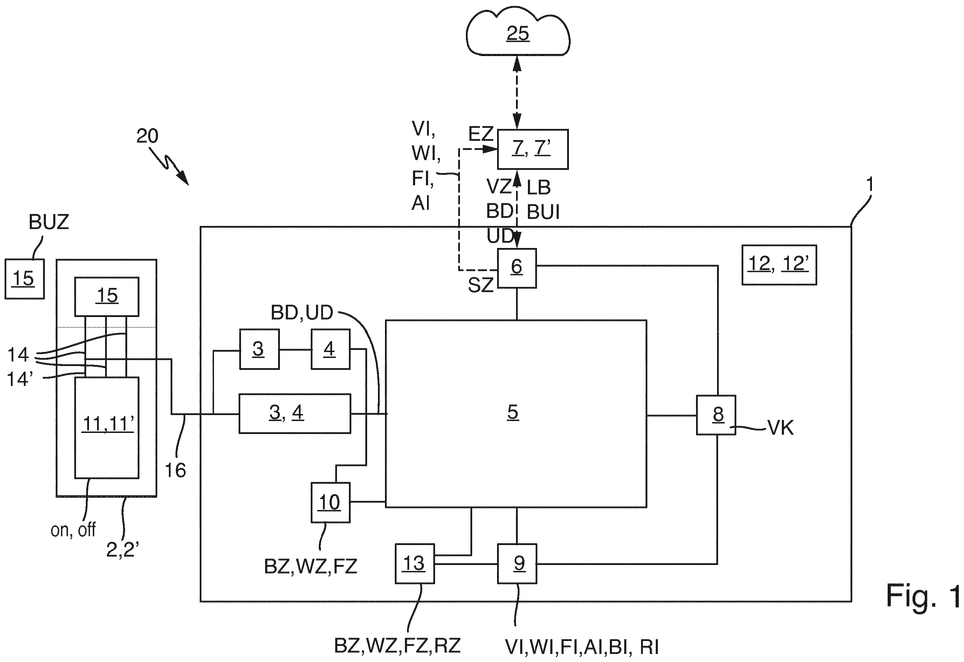

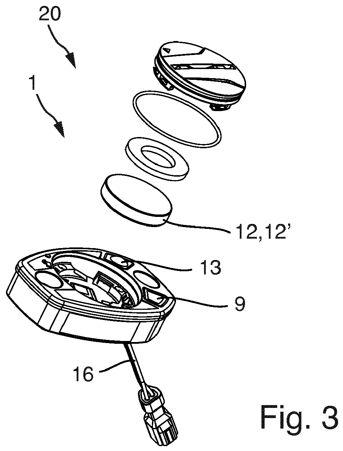

Fig. 1 bis 3 zeigen ein erfindungsgemäßes System 20. Das erfindungsgemäße System 20 weist eine erfindungsgemäße Einrichtung 1 auf.

Die erfindungsgemäße Einrichtung 1 ist zur Erfassung von Betriebsdaten BD eines motorangetriebenen Werkzeugs 2 ausgebildet. Die Einrichtung 1 ist zur Anordnung an dem Werkzeug 2 ausgebildet, insbesondere angeordnet. Die Einrichtung 1 weist eine Erfassungs- und/oder Auswerteeinrichtung 3, 4 auf. Die Erfassungs- und/oder Auswerteeinrichtung 3, 4 ist dazu ausgebildet, mindestens eine Größe zu erfassen, wobei die Größe von einem Betriebszustand des Werkzeugs 2 abhängig ist, und die erfasste Größe zur Ermittlung der Betriebsdaten BD auszuwerten, wie in Fig. 1 links in einem oberen Pfad gezeigt. Zusätzlich oder alternativ ist die Erfassungs- und/oder Auswerteeinrichtung 3, 4 dazu ausgebildet, die Betriebsdaten BD zu erfassen, wie in Fig. 1 links in einem unteren Pfad gezeigt, insbesondere erfasst.

Zusätzlich weist die Einrichtung 1 einen Betriebsdatenspeicher 5 auf. Der Betriebsdatenspeicher 5 ist dazu ausgebildet, die ermittelten und/oder erfassten Betriebsdaten BD zu speichern, insbesondere speichert. Des Weiteren weist die Einrichtung 1 eine Kommunikationsschnittstelle 6 auf. Die Kommunikationsschnittstelle 6 ist dazu ausgebildet, in einem Verbindungszustand VZ mit einem externen Gerät 7 zu diesem die gespeicherten Betriebsdaten BD kabellos zu übertragen, insbesondere überträgt. Außerdem ist die Einrichtung 1, insbesondere eine Steuerungseinrichtung 8, im gezeigten Ausführungsbeispiel in Form eines Mikrocontrollers, dazu ausgebildet, falls mindestens ein Verbindungskriterium VK durch die Betriebsdaten BD erfüllt ist und/oder mindestens ein Verbindungskriterium VK erfüllt ist, wobei das Verbindungskriterium VK ist, dass die Betriebsdaten BD aus dem Betriebsdatenspeicher 5 nicht gelöscht worden sind und/oder nicht übertragen worden sind, eine Verbindungsinformation VI mittels der Kommunikationsschnittstelle 6 in einem von dem Verbindungszustand VZ verschiedenen Sendezustand SZ kabellos zu senden und/oder mittels einer Ausgabeeinrichtung 9 der Einrichtung 1 auszugeben, insbesondere sendet und/oder gibt aus.

Zusätzlich weist die Einrichtung 1 eine Ermittlungseinrichtung 10 auf. Die Ermittlungseinrichtung 10 ist dazu ausgebildet, einen Wartungszustand WZ und einen von dem Wartungszustand WZ verschiedenen Fehlerzustand FZ des Werkzeugs 2 basierend auf den ermittelten und/oder erfassten Betriebsdaten BD zu ermitteln, insbesondere ermittelt. Des Weiteren weist die Einrichtung 1 die Ausgabeeinrichtung 9 auf. Außerdem ist die Einrichtung 1, insbesondere die Steuerungseinrichtung 8, dazu ausgebildet, falls der Wartungszustand WZ ermittelt ist, eine Wartungsinformation WI mittels der Ausgabeeinrichtung 9 auszugeben, insbesondere gibt aus. Weiter ist die Einrichtung 1, insbesondere die Steuerungseinrichtung 8, dazu ausgebildet, falls der Fehlerzustand FZ ermittelt ist, eine von der Wartungsinformation WI verschiedene Fehlerinformation FI mittels der Ausgabeeinrichtung 9 auszugeben, insbesondere gibt aus.

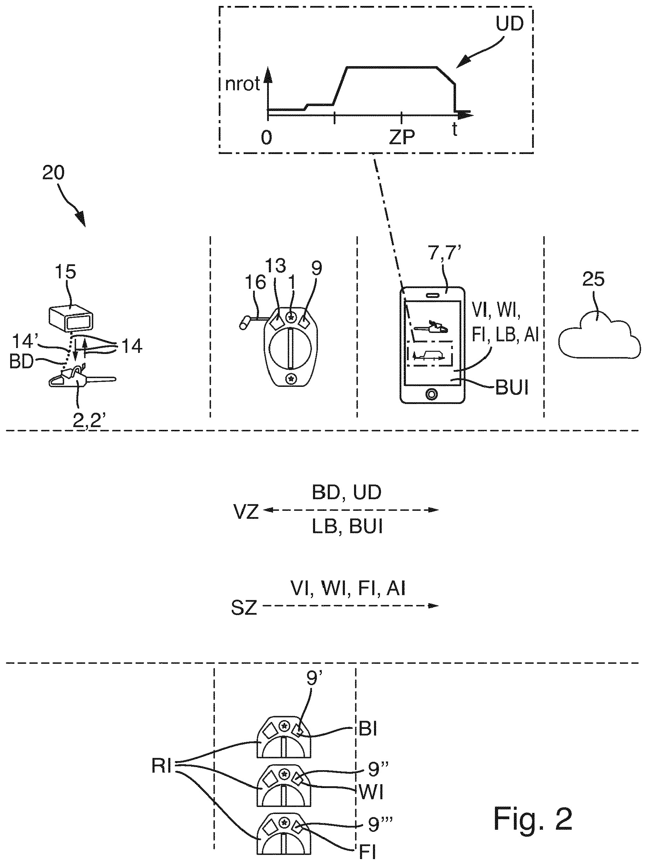

Zudem zeigen Fig. 1 und 2 ein erfindungsgemäßes Verfahren zum Betreiben der Einrichtung 1, insbesondere des Systems 20. Die Einrichtung 1 ist an dem Werkzeug 2 angeordnet. Insbesondere weist das Verfahren die Schritte auf: Erfassen mindestens der Größe, wobei die Größe von dem Betriebszustand des Werkzeugs 2 abhängig ist, und Auswerten der erfassten Größe zur Ermittlung der Betriebsdaten BD, und/oder Erfassen der Betriebsdaten BD mittels der Erfassungs- und/oder Auswerteeinrichtung 3, 4. Speichern der ermittelten und/oder erfassten Betriebsdaten BD mittels des Betriebsdatenspeichers 5. Falls mindestens das Verbindungskriterium VK durch die Betriebsdaten BD erfüllt ist und/oder mindestens das Verbindungskriterium VK erfüllt ist, wobei das Verbindungskriterium VK ist, dass die Betriebsdaten BD aus dem Betriebsdatenspeicher 5 nicht gelöscht worden sind und/oder nicht übertragen worden sind, kabellos Senden mittels der Kommunikationsschnittstelle 6 in dem von dem Verbindungszustand VZ verschiedenen Sendezustand SZ und/oder Ausgeben mittels der Ausgabeeinrichtung 9 der Einrichtung 1 der Verbindungsinformation VI.

Im Detail ist das Verbindungskriterium VK, dass der Wartungszustand WZ und/oder der Fehlerzustand FZ ermittelt sind/ist. Insbesondere weist die Verbindungsinformation VI die Wartungsinformation WI und/oder die Fehlerinformation FI auf.

Im gezeigten Ausführungsbeispiel ist die Ermittlungseinrichtung 10 dazu ausgebildet, einen von dem Wartungszustand WZ und dem Fehlerzustand FZ verschiedenen Bestimmungszustand BZ des Werkzeugs 2 zu ermitteln, insbesondere ermittelt. Die Einrichtung 1, insbesondere die Steuerungseinrichtung 8, ist dazu ausgebildet, falls der Bestimmungszustand BZ ermittelt ist, eine Bestimmungsinformation BI mittels der Ausgabeeinrichtung 9 auszugeben, insbesondere gibt aus.

Insbesondere ist das Ausgeben optisch bzw. die Ausgabeeinrichtung 9 weist eine Anzeige in Form einer grünen LED 9', einer gelben LED 9" und einer roten LED 9'" auf. Die Ausgabeeinrichtung 9 kann die Bestimmungsinformation BI durch ein, insbesondere dauerhaftes, Leuchten der grünen LED 9' ausgeben. Des Weiteren kann die Ausgabeeinrichtung 9 die Wartungsinformation WI durch ein, insbesondere dauerhaftes, Leuchten der gelben LED 9" ausgeben. Außerdem kann die Ausgabeeinrichtung 9 die Fehlerinformation FI durch ein, insbesondere dauerhaftes, Leuchten der roten LED 9'" ausgeben. In alternativen Ausführungsbeispielen kann die Ausgabeeinrichtung zusätzlich oder alternativ die verschiedenen Informationen durch andere Farben und/oder durch ein verschiedenes Leuchten, wie eine dauerhaftes Leuchten oder ein Blinken, ausgeben.

Zusätzlich weist das System 20 das Werkzeug 2 auf.

Im gezeigten Ausführungsbeispiel ist die Einrichtung 1, insbesondere die Erfassungs- und/oder Auswerteeinrichtung 3, 4, mit dem Werkzeug 2 mittels eines Kabels 16 zur Erfassung der Betriebsdaten BD verbunden.

Insbesondere ist das Werkzeug 2 ein Akkuwerkzeug 2'. Das Akkuwerkzeug 2' weist eine Akkuschnittstelle 14 auf. Weiter ist das Akkuwerkzeug 2' mittels der Akkuschnittstelle 14 mit einem Akkumulator 15, insbesondere zur Antriebsstromversorgung, insbesondere eines Antriebsmotors 11 des Werkzeugs 2, verbunden. Zwischen dem Akkuwerkzeug 2' und dem Akkumulator 15 werden über die Akku-Schnittstelle 14, insbesondere eine Kommunikationsleitung 14' der Akku-Schnittstelle 14, die Betriebsdaten BD übertragen. Das Kabel 16 ist mit der Akku-Schnittstelle 14 verbunden.

Zudem ist im gezeigten Ausführungsbeispiel der Antriebsmotor 11 ein Elektroantriebsmotor 11'.

Des Weiteren ist im gezeigten Ausführungsbeispiel die Einrichtung 1 getrennt von dem Werkzeug 2 ausgebildet.

Zusätzlich weist das System 20 das externe Gerät 7, im gezeigten Ausführungsbeispiel in Form eines Smartphones 7', auf.

Das externe Gerät 7 ist dazu ausgebildet, in dem Verbindungszustand VZ mit der Kommunikationsschnittstelle 6 von dieser die gespeicherten Betriebsdaten BD kabellos zu übertragen, insbesondere überträgt.

Zusätzlich ist das externe Gerät 7 dazu ausgebildet, in einem von dem Verbindungszustand VZ verschiedenen Empfangszustand EZ die kabellos gesendete Verbindungsinformation VI kabellos zu empfangen, insbesondere empfängt.

Im gezeigten Ausführungsbeispiel ist das externe Gerät 7 dazu ausgebildet, bei Empfang der gesendeten Verbindungsinformation VI zum Aufbau des Verbindungszustands VZ mit der Kommunikationsschnittstelle 6 bei dieser danach anzufragen, insbesondere frägt an.

Außerdem sind die Betriebsdaten BD für den Bestimmungszustand BZ, den Wartungszustand WZ und/oder den Fehlerzustand FZ des Werkzeugs 2 charakteristisch.

Weiter weisen die Betriebsdaten BD Benutzungsdaten UD auf, insbesondere mindestens einen Zeitpunkt ZP wobei zu dem mindestens einen Zeitpunkt ZP der Antriebsmotor 11 des Werkzeugs 2 einen Ein-Zustand on aufgewiesen hat.

Zudem sind die Betriebsdaten BD verschiedenartig. Die Verbindungsinformation VI weist eine Artinformation AI über eine Art der das, insbesondere jeweilige, Verbindungskriterium VK erfüllenden Betriebsdaten BD auf.

Im gezeigten Ausführungsbeispiel sind die Betriebsdaten BD für den Wartungszustand WZ und/oder den Fehlerzustand FZ charakteristisch eine Art. Insbesondere ist das Verbindungskriterium VK für die Betriebsdaten BD für den Wartungszustand WZ und/oder den Fehlerzustand FZ charakteristisch, dass der Wartungszustand WZ oder der Fehlerzustand FZ ermittelt ist und die Betriebsdaten BD für den Wartungszustand WZ und/oder den Fehlerzustand FZ charakteristisch nicht gelöscht worden sind. Zusätzlich sind die Benutzungsdaten UD aufweisend mindestens den Zeitpunkt ZP eine verschiedene Art. Insbesondere ist das Verbindungskriterium VK für die Benutzungsdaten UD aufweisend mindestens den Zeitpunkt ZP, dass die Benutzungsdaten UD aufweisend mindestens den Zeitpunkt ZP nicht übertragen worden sind.

Des Weiteren ist die Einrichtung 1, insbesondere die Steuerungseinrichtung 8, dazu ausgebildet, die Betriebsdaten BD, insbesondere für den Wartungszustand WZ und/oder den Fehlerzustand FZ charakteristisch, aufgrund eines mittels der Kommunikationsschnittstelle 6 in dem Verbindungszustand VZ mit dem externen Gerät 7 von diesem kabellos übertragenen Löschungsbefehls LB aus dem Betriebsdatenspeicher 5 zu löschen, insbesondere löscht.

Das externe Gerät 7 ist dazu ausgebildet, in dem Verbindungszustand VZ mit der Kommunikationsschnittstelle 6 zu dieser den Löschungsbefehl LB kabellos zu übertragen, insbesondere überträgt.

Zusätzlich ist die Einrichtung 1, insbesondere die Steuerungseinrichtung 8, dazu ausgebildet, zeitlich nach einem Übertragen der Betriebsdaten BD, insbesondere der Benutzungsdaten UD, aufgrund des Übertragens die übertragenen Betriebsdaten BD aus dem Betriebsdatenspeicher 5 zu löschen, insbesondere löscht.

Außerdem weist die Einrichtung 1 einen elektrischen Energiespeicher 12, insbesondere eine Batterie 12', auf. Die Einrichtung 1 ist dazu ausgebildet, mindestens die Kommunikationsschnittstelle 6, insbesondere und die Erfassungs- und/oder Auswerteeinrichtung 3, 4, den Betriebsdatenspeicher 5, die Ausgabeeinrichtung 9, die Ermittlungseinrichtung 10 und/oder die Steuerungseinrichtung 8, mit elektrischer Energie von dem elektrischen Energiespeicher 12 zu versorgen, insbesondere versorgt.

Im gezeigten Ausführungsbeispiel ist zusätzlich die Einrichtung 1 dazu ausgebildet, mindestens die Kommunikationsschnittstelle 6, insbesondere und die Erfassungs- und/oder Auswerteeinrichtung 3, 4, den Betriebsdatenspeicher 5, die Ausgabeeinrichtung 9, die Ermittlungseinrichtung 10 und/oder die Steuerungseinrichtung 8, mit elektrischer Energie von dem Akkumulator 15, soweit mit dem Akkuwerkzeug 2' verbunden, mittels des Kabels 16 zu versorgen, insbesondere versorgt.

Weiter ist die Einrichtung 1 mindestens bei einem Aus-Zustand off des Antriebsmotors 11 des Werkzeugs 2, insbesondere bei einem Betriebsunfähigkeitszustand BUZ des Werkzeugs 2, dazu ausgebildet, die Verbindungsinformation VI kabellos zu senden und/oder auszugeben und/oder die Wartungsinformation WI und/oder die Fehlerinformation Fl, insbesondere und/oder die Bestimmungsinformation Bl, auszugeben, insbesondere sendet und/oder gibt aus.

Im gezeigten Ausführungsbeispiel weist das Werkzeug 2 den Betriebsunfähigkeitszustand BUZ auf, falls das Akkuwerkzeug 2' mit dem Akkumulator 15 nicht verbunden ist.

Zudem weist die Einrichtung 1 ein benutzerbetätigbares Bedienelement 13, im gezeigten Ausführungsbeispiel in Form einer Drucktaste, auf.

Zusätzlich ist die Einrichtung 1 dazu ausgebildet, falls das Bedienelement 13 betätigt worden ist, die Verbindungsinformation VI und/oder die Wartungsinformation WI und/oder die Fehlerinformation Fl, insbesondere und/oder die Bestimmungsinformation BI, auszugeben, insbesondere gibt aus.

Zusätzlich ist das Bedienelement 13 zur Benutzereingabe des Bestimmungszustands BZ und/oder des Wartungszustands WZ und/oder des Fehlerzustands FZ und/oder eines anderen Zustands, insbesondere eines Reservierungszustands RZ, des Werkzeugs 2 in die Einrichtung 1 ausgebildet.

Des Weiteren ist das externe Gerät 7 zur Benutzereingabe von mindestens einer Benutzerinformation BUI über den Bestimmungszustand BZ und/oder den Wartungszustand WZ und/oder den Fehlerzustand FZ und/oder den anderen Zustand, insbesondere den Reservierungszustand RZ, insbesondere und zur kabellosen Übertragung und/oder zur Speicherung in die Einrichtung 1 und/oder eine Datenbank 25, insbesondere des Systems 20, ausgebildet.

Im Detail ist das System 20 dazu ausgebildet, aufgrund einer Betätigung des Bedienelements 13 die Benutzereingabe und/oder die kabellose Übertragung und/oder die Speicherung der Benutzerinformation BUI freizugeben.

Im gezeigten Ausführungsbeispiel ist das Werkzeug 2 eine Säge 2".

Beispielsweise können beim Arbeiten mit der Säge 2" im Wald eine Sägekette und eine Schiene der Säge 2" mit Erde in Berührung kommen. Dies kann zu einem Defekt der Sägekette und/oder der Schiene führen. Es kann sein, dass die Ermittlungseinrichtung diesen Defekt bzw. den Fehlerzustand FZ des Werkzeugs 2 nicht ermitteln kann. Um zu verhindern, dass ein anderer Benutzer, der von dem Defekt nichts weiß, mit dem Werkzeug 2 arbeitet, und/oder um zu ermöglichen, dass ein Werkstattmitarbeiter von dem Defekt Kenntnis erlangt, kann der Fehlerzustand FZ mittels des Bedienelements 13 in die Einrichtung 1 eingegeben werden. Zusätzlich kann die, insbesondere weiterführende, Benutzerinformation BUI über den Fehlerzustand, insbesondere die Berührung und/oder die Sägekette und/oder die Schiene, mittels des externen Geräts 7 eingegeben werden.

Außerdem kann die Ausgabeeinrichtung 9 den Reservierungszustand RZ mittels einer Reservierungsinformation RI durch ein abwechselndes Leuchten der grünen LED 9', der gelben LED 9" und der roten LED 9'" ausgeben. In alternativen Ausführungsbeispielen kann die Ausgabeeinrichtung zusätzlich oder alternativ die Reservierungsinformation durch eine andere Farbe ausgeben.

Weiter kann die Einrichtung 1 die Benutzereingabe durch Farbänderung und/oder durch kurzes Blinken bestätigen.

Zudem sind die Erfassungs- und/oder Auswerteeinrichtung 3, 4, der Betriebsdatenspeicher 5, die Kommunikationsschnittstelle 6, die Ausgabeeinrichtung 9, die Ermittlungseinrichtung 10, der elektrische Energiespeicher 12, das benutzerbetätigbare Bedienelement 13 und/oder die Steuerungseinrichtung 8 miteinander elektrisch verbunden.

Wie die gezeigten und oben erläuterten Ausführungsbeispiele deutlich machen, stellt die Erfindung eine Einrichtung zur Erfassung von Betriebsdaten eines motorangetriebenen Werkzeugs, wobei die Einrichtung verbesserte Eigenschaften aufweist, ein System aufweisend eine solche Einrichtung und ein Verfahren zum Betreiben einer solchen Einrichtung, insbesondere eines solchen Systems, bereit.

## Patentansprüche

1. Einrichtung (1) zur Erfassung von Betriebsdaten (BD) eines motorangetriebenen Werkzeugs (2), wobei die Einrichtung (1) zur Anordnung an dem Werkzeug (2) ausgebildet ist, wobei die Einrichtung (1) aufweist:
- eine Erfassungs- und/oder Auswerteeinrichtung (3, 4), wobei die Erfassungs- und/oder Auswerteeinrichtung (3, 4) dazu ausgebildet ist, mindestens eine Größe zu erfassen, wobei die Größe von einem Betriebszustand des Werkzeugs (2) abhängig ist, und die erfasste Größe zur Ermittlung der Betriebsdaten (BD) auszuwerten, und/oder die Betriebsdaten (BD) zu erfassen,
- einen Betriebsdatenspeicher (5), wobei der Betriebsdatenspeicher (5) dazu ausgebildet ist, die ermittelten und/oder erfassten Betriebsdaten (BD) zu speichern, und
- eine Kommunikationsschnittstelle (6), wobei die Kommunikationsschnittstelle (6) dazu ausgebildet ist, in einem Verbindungszustand (VZ) mit einem externen Gerät (7) zu diesem die gespeicherten Betriebsdaten (BD) kabellos zu übertragen,
- wobei die Einrichtung (1) dazu ausgebildet ist,
- falls mindestens ein Verbindungskriterium (VK) durch die Betriebsdaten (BD) erfüllt ist und/oder mindestens ein Verbindungskriterium (VK) erfüllt ist, wobei das Verbindungskriterium (VK) ist, dass die Betriebsdaten (BD) aus dem Betriebsdatenspeicher (5) nicht gelöscht worden sind und/oder nicht übertragen worden sind,
- eine Verbindungsinformation (VI) mittels der Kommunikationsschnittstelle (6) in einem von dem Verbindungszustand (VZ) verschiedenen Sendezustand (SZ) kabellos zu senden und/oder mittels einer Ausgabeeinrichtung (9) der Einrichtung (1) auszugeben.

2. Einrichtung (1), insbesondere nach Anspruch 1, zur Erfassung von Betriebsdaten (BD) eines motorangetriebenen Werkzeugs (2), wobei die Einrichtung (1) zur Anordnung an dem Werkzeug (2) ausgebildet ist, wobei die Einrichtung (1) aufweist:
- eine Erfassungs- und/oder Auswerteeinrichtung (3, 4), wobei die Erfassungs- und/oder Auswerteeinrichtung (3, 4) dazu ausgebildet ist, mindestens eine Größe zu erfassen, wobei die Größe von einem Betriebszustand des Werkzeugs (2) abhängig ist, und die erfasste Größe zur Ermittlung der Betriebsdaten (BD) auszuwerten, und/oder die Betriebsdaten (BD) zu erfassen,
- eine Ermittlungseinrichtung (10), wobei die Ermittlungseinrichtung (10) dazu ausgebildet ist, einen Wartungszustand (WZ) und einen von dem Wartungszustand (WZ) verschiedenen Fehlerzustand (FZ) des Werkzeugs (2) basierend auf den ermittelten und/oder erfassten Betriebsdaten (BD) zu ermitteln, und
- eine Ausgabeeinrichtung (9),
- wobei die Einrichtung (1) dazu ausgebildet ist,
- falls der Wartungszustand (WZ) ermittelt ist, eine Wartungsinformation (WI) mittels der Ausgabeeinrichtung (9) auszugeben, und
- falls der Fehlerzustand (FZ) ermittelt ist, eine von der Wartungsinformation (WI) verschiedene Fehlerinformation (FI) mittels der Ausgabeeinrichtung (9) auszugeben.

3. Einrichtung (1) nach Anspruch 1, insbesondere und nach Anspruch 2, wobei die Einrichtung (1) aufweist:
- eine Ermittlungseinrichtung (10), wobei die Ermittlungseinrichtung (10) dazu ausgebildet ist, einen Wartungszustand (WZ) und/oder einen Fehlerzustand (FZ) des Werkzeugs (2) basierend auf den ermittelten und/oder erfassten Betriebsdaten (BD) zu ermitteln, und
- wobei das Verbindungskriterium (VK) ist, dass der Wartungszustand (WZ) und/oder der Fehlerzustand (FZ) ermittelt sind/ist,
- insbesondere und wobei die Verbindungsinformation (VI) eine Wartungsinformation (WI) und/oder eine Fehlerinformation (FI) aufweist.

4. Einrichtung (1) nach Anspruch 2 oder 3,
- wobei die Betriebsdaten (BD) für einen von dem Wartungszustand (WZ) und dem Fehlerzustand (FZ) verschiedenen Bestimmungszustand (BZ), den Wartungszustand (WZ) und/oder den Fehlerzustand (FZ) des Werkzeugs (2) charakteristisch sind.

5. Einrichtung (1) nach Anspruch 1, insbesondere und mindestens einem von diesem abhängigen Anspruch,
- wobei die Betriebsdaten (BD) Benutzungsdaten (UD) aufweisen, insbesondere mindestens einen Zeitpunkt (ZP), wobei zu dem mindestens einen Zeitpunkt (ZP) ein Antriebsmotor (11) des Werkzeugs (2) einen Ein-Zustand (on) aufgewiesen hat.

6. Einrichtung (1) nach Anspruch 1, insbesondere und mindestens einem davon abhängigen Anspruch,
- wobei die Betriebsdaten (BD) verschiedenartig sind, wobei die Verbindungsinformation (VI) eine Artinformation (AI) über eine Art der das Verbindungskriterium (VK) erfüllenden Betriebsdaten (BD) aufweist.

7. Einrichtung (1) nach Anspruch 1, insbesondere und mindestens einem davon abhängigen Anspruch, insbesondere nach Anspruch 4 und/oder Anspruch 5,
- wobei die Einrichtung (1) dazu ausgebildet ist, die Betriebsdaten (BD), insbesondere für den Wartungszustand (WZ) und/oder den Fehlerzustand (FZ) charakteristisch, aufgrund eines mittels der Kommunikationsschnittstelle (6) in dem Verbindungszustand (VZ) mit einem externen Gerät (7) von diesem kabellos übertragenen Löschungsbefehls (LB) aus dem Betriebsdatenspeicher (5) zu löschen, und/oder
- wobei die Einrichtung (1) dazu ausgebildet ist, zeitlich nach einem Übertragen der Betriebsdaten (BD), insbesondere der Benutzungsdaten (UD), aufgrund des Übertragens die übertragenen Betriebsdaten (BD) aus dem Betriebsdatenspeicher (5) zu löschen.

8. Einrichtung (1) nach einem der vorhergehenden Ansprüche, wobei die Einrichtung (1) aufweist:
- einen elektrischen Energiespeicher (12), insbesondere eine Batterie (12'), wobei die Einrichtung (1) dazu ausgebildet ist, mindestens die Kommunikationsschnittstelle (6) mit elektrischer Energie von dem elektrischen Energiespeicher (12) zu versorgen.

9. Einrichtung (1) nach einem der vorhergehenden Ansprüche,
- wobei die Einrichtung (1) mindestens bei einem Aus-Zustand (off) eines Antriebsmotors (11) des Werkzeugs (2), insbesondere bei einem Betriebsunfähigkeitszustand (BUZ) des Werkzeugs (2), dazu ausgebildet, die Verbindungsinformation (VI) kabellos zu senden und/oder auszugeben und/oder die Wartungsinformation (WI) und/oder die Fehlerinformation (FI) auszugeben.

10. Einrichtung (1) nach einem der vorhergehenden Ansprüche, wobei die Einrichtung (1) aufweist:
- ein benutzerbetätigbares Bedienelement (13), wobei die Einrichtung (1) dazu ausgebildet ist, falls das Bedienelement (13) betätigt worden ist, die Verbindungsinformation (VI) und/oder die Wartungsinformation (WI) und/oder die Fehlerinformation (FI) auszugeben.

11. Einrichtung (1) nach einem der vorhergehenden Ansprüche, insbesondere nach Anspruch 2 oder mindestens einem von diesem abhängigen Anspruch, wobei die Einrichtung (1) aufweist:
- ein benutzerbetätigbares Bedienelement (13), wobei das Bedienelement (13) zur Benutzereingabe eines von dem Wartungszustand (WZ) und dem Fehlerzustand (FZ) verschiedenen Bestimmungszustands (BZ) und/oder des Wartungszustands (WZ) und/oder des Fehlerzustands (FZ) und/oder eines anderen Zustands, insbesondere eines Reservierungszustands (RZ), des Werkzeugs (2) in die Einrichtung (1) ausgebildet ist.

12. System (20), wobei das System (20) aufweist:
- eine Einrichtung (1) nach einem der vorhergehenden Ansprüche, und
- das Werkzeug (2).

13. System (20), insbesondere nach Anspruch 11, wobei das System (20) aufweist:
- eine Einrichtung (1) nach einem der Ansprüche 1 bis 11, und
- das, insbesondere mobile, externe Gerät (7),
- wobei das externe Gerät (7) dazu ausgebildet ist, in dem Verbindungszustand (VZ) mit der Kommunikationsschnittstelle (6) von dieser die gespeicherten Betriebsdaten (BD) kabellos zu übertragen, und/oder
- wobei das externe Gerät (7) dazu ausgebildet ist, in einem von dem Verbindungszustand (VZ) verschiedenen Empfangszustand (EZ) die kabellos gesendete Verbindungsinformation (VI) kabellos zu empfangen, und/oder
- wobei das externe Gerät (7) dazu ausgebildet ist, in dem Verbindungszustand (VZ) mit der Kommunikationsschnittstelle (6) zu dieser den Löschungsbefehl (LB) kabellos zu übertragen, und/oder
- wobei das externe Gerät (7) zur Benutzereingabe von mindestens einer Benutzerinformation (BUI) über den Bestimmungszustand (BZ) und/oder den Wartungszustand (WZ) und/oder den Fehlerzustand (RZ) und/oder den anderen Zustand, insbesondere den Reservierungszustand (RZ), insbesondere und zur kabellosen Übertragung und/oder zur Speicherung in die Einrichtung (1) und/oder eine Datenbank (25), ausgebildet ist.

14. System (20) nach Anspruch 13,
- wobei das System (20) die Einrichtung (1) nach Anspruch 11 aufweist, und
- wobei das System (20) dazu ausgebildet ist, aufgrund einer Betätigung des Bedienelements (13) die Benutzereingabe und/oder die kabellose Übertragung und/oder die Speicherung der Benutzerinformation (BUI) freizugeben.

15. Verfahren zum Betreiben einer Einrichtung (1) nach einem der Ansprüche 1 bis 11, insbesondere eines Systems (20) nach einem der Ansprüche 12 bis 14, wobei die Einrichtung (1) an dem Werkzeug (2) angeordnet ist, insbesondere wobei das Verfahren die Schritte aufweist:
- Erfassen mindestens der Größe, wobei die Größe von dem Betriebszustand des Werkzeugs (2) abhängig ist, und Auswerten der erfassten Größe zur Ermittlung der Betriebsdaten (BD), und/oder Erfassen der Betriebsdaten (BD) mittels der Erfassungs- und/oder Auswerteeinrichtung (3, 4),
- Speichern der ermittelten und/oder erfassten Betriebsdaten (BD) mittels des Betriebsdatenspeichers (5), und
- falls mindestens das Verbindungskriterium (VK) durch die Betriebsdaten (BD) erfüllt ist und/oder mindestens das Verbindungskriterium (VK) erfüllt ist, wobei das Verbindungskriterium (VK) ist, dass die Betriebsdaten (BD) aus dem Betriebsdatenspeicher (5) nicht gelöscht worden sind und/oder nicht übertragen worden sind,
- kabellos Senden mittels der Kommunikationsschnittstelle (6) in dem von dem Verbindungszustand (VZ) verschiedenen Sendezustand (SZ) und/oder Ausgeben mittels der Ausgabeeinrichtung (9) der Einrichtung (1) der Verbindungsinformation (VI).
